# EUROPEAN PATENT SPECIFICATION

(11) **EP 3 683 925 B1**
(45) Date of publication and mention of the grant of the patent: **23.06.2021**
(21) Application number: 20151112.8
(22) Date of filing: 10.01.2020
(51) Int. Cl.: H02J 9/06, F21S 9/02, H05B 45/00

(54) **INSTALLATION ELEMENT**
INSTALLATIONSELEMENT
ÉLÉMENT D'INSTALLATION

(30) Priority: 15.01.2019 GB 201900539
(43) Date of publication of application: 22.07.2020
(73) Proprietor: Kosnic Lighting Limited, Newbury, Berkshire RG14 5PX (GB)
(72) Inventor: Kuang, Wen Tao, Thatcham, Berkshire RG18 9NL (GB)
(74) Representative: Bryers LLP

(56) References cited:
- WO-A1-97/47162
- US-A- 6 091 200
- US-A1- 2008 259 599
- US-A1- 2009 009 989
- US-A1- 2012 112 633
- US-B1- 7 490 960

## Description

### Field of the Invention

The present invention relates to an installation element, in particular to an installation element for electrically connecting an electronic component to control gear of a luminaire.

### Background of the Invention

Emergency lighting plays a vital role in security systems for modern property management, and is an important facility of industrial and public buildings that is closely related to both personal safety and building safety. The importance of emergency lighting increases as population density increases, such as from accelerated urbanization, which increases security risk.

An emergency lighting system is configured to provide lighting to ensure that people are safely evacuated from a building when the general lighting system has failed and is unable to operate normally.

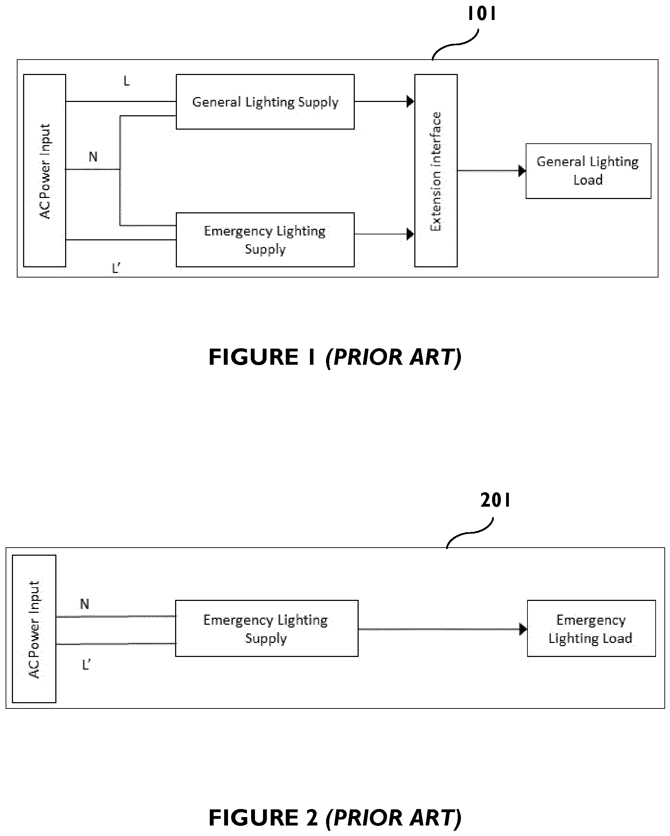

A first type of an emergency lighting system is known as a 'maintained' system, a block diagram of an example of which is shown in Figure 1 *(Prior Art).* Emergency lighting system 101 is configured to operate in a normal situation and in an emergency (power cut situation). Emergency lighting system 101 has a first live input L, a second live input L', and a neutral input N. The first live input L is a switched live input. The switched live input L is fed into the general lighting supply that drives the general lighting load in a normal situation. The switched live input L is typically connected to a wall switch of a building, which is provided to allow the power to lighting in the building to be selectively cut and restored through manual operation thereof by a tenant of the building. The second live input L' is a permanent live input. The permanent live input L' is from a primary power entry point of the building and is not made accessible for turning off and on by tenants of the building in a normal situation. Instead, the permanent live input L' is fed into an emergency lighting supply comprising a battery arrangement configured to be charged during a normal situation. In the event of a power cut situation, the battery arrangement discharges to a DC-DC converter arranged to generate a suitable current to drive the general lighting load.

A second type of an emergency lighting system is known as a 'non-maintained' system, a block diagram of an example of which is shown in Figure 2 *(Prior Art).* Emergency lighting system 201 has a single live input L' and a neutral input N. The single live input L' is a permanent live input. The permanent live input L' is fed into an emergency lighting supply comprising a battery arrangement configured to be charged during a normal situation and to drive an emergency lighting load in the event of a power cut situation.

Current emergency lighting systems include an LED indicator, which is typically green in standard systems or dual-colour of green and red for systems having self-testing functionality. In a standard system, the green LED indicator is always on unless there is a power cut or the battery arrangement of the emergency lighting supply is unplugged. This helps an installer or operative to identify the position and the status of the emergency lighting system. In a self-testing system, the LED indicator is normally green but changes to red to report a fault, and can flash at one of a plurality of different speeds, each speed associated with a different fault, to indicate a reason for reporting a fault.

It is known for dedicated emergency luminaires, which are usually of the non-maintained type, to be provided with an LED indicator that is incorporated in the product during original manufacture.

However, there are numerous applications in which a general lighting system is to be converted to a maintained emergency system through the addition of an emergency conversion module. Although the general lighting system may conveniently include a type of luminaire that features a pre-installed LED indicator that is wired to a connector ready for connection to an emergency conversion module, in many other cases an external LED indicator is required to be installed next to a luminaire, on the same mounting surface, via a separate fixing.

In the scenario of converting a standard ceiling-mount Class III LED luminaire (LED panel and LED downlight etc.) into a maintained emergency light using an emergency conversion module, installing the required external LED indicator commonly involves forming a new opening near the luminaire, fitting the LED indicator into the opening and securing the LED indicator in position using clips or another fixing, and then wiring the LED indicator to the emergency conversion module. This process is complicated and time-consuming and can be detrimental to the appearance of the installation.

It is therefore desirable to improve the installation of an emergency LED indicator.

Daylight harvesting lighting is increasingly being used in pursuit of reducing energy usage. Daylight harvesting luminaires are commonly used near windows or other areas in buildings such as offices and schools where it most likely that there will be sufficient sunlight during the day time to allow luminaires provided for a particular space to be dimmed while still achieving an acceptable level of illumination in that area.

A daylight harvesting luminaire comprises a light sensor and a daylight harvesting driver in addition to a light source. The light sensor is usually placed alongside the luminaire, at a suitable position to detect the environmental light level. Signals from the light sensor are provided to the daylight harvesting driver, which operates to decrease or increase the level of illumination from the light source until a predetermined light output, associated with a desired brightness, is achieved. However, installing the light sensor at an appropriate site requires additional work to be carried out to create a suitable aperture for receiving the light sensor and additional fixings to be used to secure the light sensor in place.

It is therefore desirable to improve the installation of a daylight harvesting light sensor.

It is an object of the present invention to provide improvements in the installation of a peripheral device for a luminaire.

International Patent Publication No. WO 97/47162 A1 discloses a miniature electrical switching apparatus that includes a thin disk-shaped switching unit, positionable within a light bulb socket, and a thin film flexible electrical conductor having one end attached to the switching unit, and terminating at its distal end in a detector for sensing light or other properties and generating a small electrical current for controlling actuation of the switching unit.

### Summary of the Invention

According to a first aspect there is provided an installation element for connecting an electronic component to control gear of a luminaire, as claimed in claim 1.

An installation element for connecting an electronic component to control gear of a luminaire is thus provided that comprises a base portion supporting a printed circuit; an electronic component supported by a first region of the base portion, an electrical connector device supported by a second region of the base portion, and a securing arrangement supported by a third region of the base portion; the second region of the base portion spaced from the first region of the base portion, and the third region of the base portion separate from the second region of the base portion; the electrical connector device electrically connected to the electronic component; the securing arrangement attachable to the luminaire, and the electrical connector device electrically connectable to control gear of the luminaire; in which the base portion is flexible to allow the base portion to be manipulated into a condition in which the first region and the second region extend in different planes.

In an example, the printed circuit may be a flexible printed circuit.

In an example, the base portion is substantially planar. In an example, the base portion is a pliable substrate.

In an example, the base portion is manipulatable from a generally flat condition in which the first region and the second region extend generally in the same plane. In an example, the base portion has a length direction L, along the length direction L the third region is disposed between the first region and the second region, and when the base portion is in the generally flat condition, the first region, second region and the third region extend generally in the same plane. In an example, the base portion is manipulatable from the generally flat condition into a condition in which an internal angle between the first plane in which the first region extends and the second plane in which the second region extends is an obtuse angle.

In an example, the base portion is manipulatable into a condition in which the first region extends in a first plane and the second region extends in a second plane that is substantially perpendicular to the first plane.

In an example, the base portion has a generally cruciform shape comprising a longer arm and a shorter arm, with the first region and the second region positioned along the longer arm and the third region positioned along the shorter arm. In an example, the shorter arm may extend along an arc of a circle having a centre along a longitudinal axis of the longer arm, the arc having a concave side facing towards the second region and a convex side facing towards the first region. In an example, the base portion may be symmetrical with respect to the longitudinal axis.

In an example, the securing arrangement comprises adhesive. In an example, the securing arrangement comprises a mechanical fixing. In an example, the securing arrangement comprises both adhesive and a mechanical fixing.

In an example, the electrical connector device comprises a socket for engagement with a plug of control gear of a luminaire. In an example, the electrical connector device comprises a plug for engagement with a socket of control gear of a luminaire.

In an example, the electronic component is an indicating component. In an example, the electronic component is a sensing component. In an example, the electronic component is a switching component.

In an example, the installation element is for connecting a visual indicating component to an emergency power supply associated with a luminaire. The visual indicating component may comprise a light-emitting diode.

In an example, the installation element is for connecting a light detecting component to a daylight harvesting driver associated with a luminaire. The light detecting component comprises a surface-mounted photodiode.

In an example, the installation element comprises at least one further electronic component wired to the printed circuit and electrically connected to the electrical connector device.

According to another aspect there is provided a method of electrically connecting an electronic component to control gear of a luminaire, comprising the steps of: identifying a luminaire having control gear and a body member; receiving an installation element according to the first aspect; and connecting the electrical connector device of the installation element to the control gear of the luminaire and securing the securing arrangement of the installation element to the body member of the luminaire such that the first region and the second region of the installation element extend in different planes and the electrical component is positionable at an exposed location when the luminaire is installed.

Further particular and preferred aspects of the present invention are set out in the dependent claims.

### Brief Description of the Drawings

The present invention will now be more particularly described, with reference to the accompanying drawings, in which:
**Figure 1** is a schematic of an example of a maintained emergency lighting system, the example according to the prior art;
**Figure 2** is a schematic of an example of a non-maintained emergency lighting system, the example according to the prior art;
**Figure 3** shows a plan view of a first face of an installation element, the installation element according to a first embodiment;
**Figure 4** shows a plan view of a second face of the installation element of **Figure 3****;**
**Figure 5** shows a side view of a first side of the installation element of **Figures 3 & 4****;**
**Figure 6** shows a perspective view of a second side of the installation element of **Figures 3**, **4 & 5****;**
**Figure 7** shows a first view of the installation element of **Figures 3, 4, 5 & 6** mounted to an LED downlight;
**Figure 8** shows a second view of the LED downlight of **Figure 7** with installation element of **Figures 3, 4, 5 & 6** mounted thereto;
**Figure 9** shows a first view of the LED downlight of **Figure 7** with installation element of **Figures** 3, **4, 5 & 6** mounted thereto installed within a ceiling;
**Figure 10** shows a close-up view of a portion of **Figure 8****;**
**Figure 11** shows a schematic of the LED downlight of **Figure 7** with installation element of **Figures 3, 4, 5 & 6** mounted thereto installed within a ceiling;
**Figure 12** shows a close-up view of a portion of **Figure 11****;**
**Figure 13** shows an LED panel with an installation element mounted thereto, the installation element according to a second embodiment;
**Figure 14** shows a close-up view of a portion of **Figure 13****;**
**Figure 15** shows the LED panel with installation element mounted thereto of **Figure 13** installed within a ceiling; and
**Figure 16** shows a close-up view of a portion of **Figure 15****.**

### Description

Example embodiments are described below in sufficient detail to enable those of ordinary skill in the art to embody and implement the apparatus, systems and processes described herein.

A schematic of an example of a maintained emergency lighting system 101 according to the prior art is shown in **Figure 1****,** and a schematic of an example of a non-maintained emergency lighting system 201 according to the prior art is shown in **Figure 2****.**

Current emergency lighting systems use an LED indicator by a luminaire, for indicating a normal situation. The fitting of this electronic component next to a luminaire, such as during the conversion of a general lighting system to an emergency light system, is inconvenient, time-consuming and can be detrimental to the aesthetic appearance of the overall installation.

Current daylight harvesting system require a light sensor to be installed alongside a luminaire, for detecting the level of ambient light. The fitting of this electronic component is similarly inconvenient, time-consuming and can be detrimental to the aesthetic appearance of the overall installation.

It is an object of the present invention to provide improvements in the installation of a peripheral device for a luminaire.

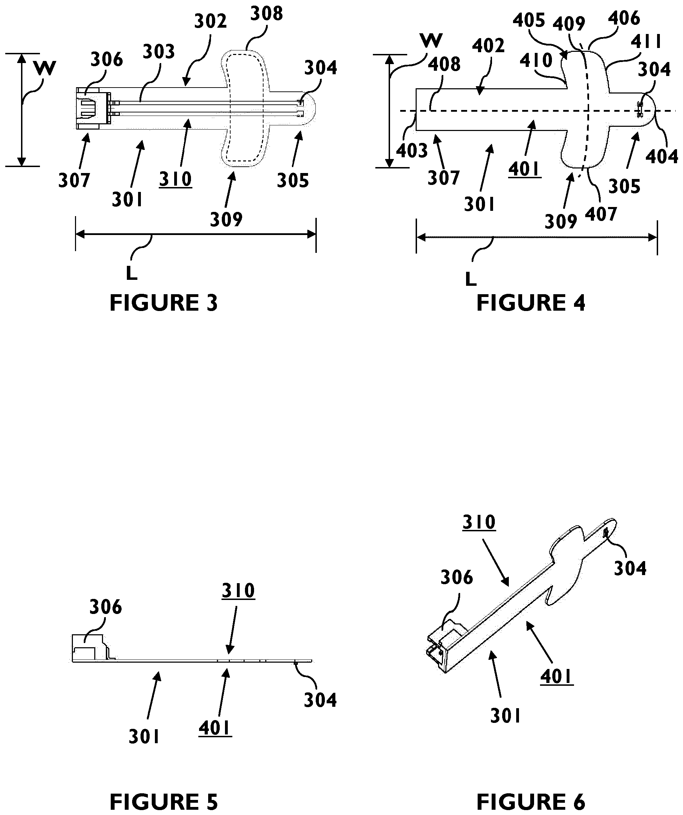

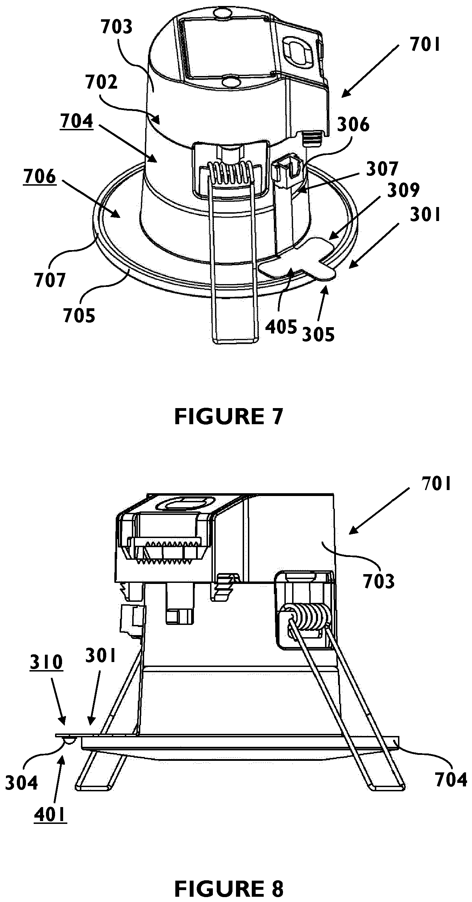

An installation element 301, according to a first embodiment, is shown in **Figures 3** to **6****.** As will be described in further detail, the installation element 301 is suitable for connecting an electronic component to control gear of a luminaire. The installation element 301 is illustrated in **Figures 7 to 12** in a first example application in which the installation element 301 is used to connect an LED indicator to an LED downlight, and is illustrated in **Figures 7 to 12** in a second example application in which the installation element 301 is used to connect an LED indicator connected to an LED panel.

Referring to **Figures 3 to 6****,** and initially to **Figure 3****,** installation element 301 comprises a base portion 302. The base portion 302 supports a printed circuit 303. An electronic component 304 is supported by a first region 305 of the base portion 302. An electrical connector device 306 is supported by a second region 307 of the base portion 302. A securing arrangement, indicated at 308, is supported by a third region 309 of the base portion 302.

The second region 307 of the base portion 302 is spaced from the first region 305 of the base portion 302. The electrical connector device 306 is electrically connected to the electronic component 304. The securing arrangement 308 is attachable to a luminaire (not shown in **Figures 3** to **6****).** The electrical connector device 307 is electrically connectable to control gear of a luminaire (not shown in **Figures 3** to **6****).**

The third region 309 of the base portion 302 is separate from the second region 307 of the base portion 302. Hence, the securing arrangement, indicated at 308, is supported by a region 309 of the base portion 302 that is separate from the region 307 of the base portion 302 that the electrical connector device 306 is supported by.

The base portion 302 is flexible to allow the base portion 302 to be manipulated into a condition in which the first region 305 and the second region 307 extend in different planes.

The base portion 302 has a length direction, indicated by arrow L, and a width direction, indicated by arrow W. According to the illustrated example, the base portion 302 is substantially planar. Preferably, the base portion 302 is a pliable substrate. In a preferred example, the printed circuit 303 is a flexible printed circuit.

A first face 310 of the installation element 301 is shown in plan view in **Figure 3****,** and a second face 401 of the installation element 301 is shown in plan view in **Figure 4****.**

In this example, the first and second faces 310, 401 correspond to opposite sides of the substantially planar base portion 302.

The base portion 302 is shown in **Figures 3** to **6** in a generally flat condition, in which the first region 305 and the second region 307 extend generally in the same plane. According to this example, along the length direction L, the third region 309 is disposed between the first region 305 and the second region 307, and when the base portion 302 is in the generally flat condition, the first region 305, second region 307 and the third region 309 extend generally in the same plane.

Preferably, the base portion 302 is manipulatable into a condition in which the first region 305 extends in a first plane and the second region 307 extends in a second plane that is substantially perpendicular to the first plane. According to this example, the base portion 302 is manipulatable into a condition in which the first region 305 and the third region 309 extend in a first plane and the second region 307 extends in a second plane that is substantially perpendicular to the first plane. In an example, the base portion 302 is manipulatable from a generally flat condition into a condition in which an internal angle between the first plane in which the first region 305 extends and the second plane in which the second region 307 extends is an obtuse angle.

According to the specific example illustrated in **Figures 3 to 6****,** and referring now in particular to **Figure 4****,** the base portion 302 has a generally cruciform shape comprising a longer arm 402 having a first end 403 and a second end 404, shown extending in the length direction L, and a shorter arm 405 having a first end 406 and a second end 407, shown extending in the width direction W. The first region 305 and the second region 306 of the base portion 302 are shown positioned along the longer arm 402, in this specific example at opposed ends 403, 404 of the longer arm 402, and the third region 305 of the base portion 302 is shown positioned along the shorter arm 405. According to this specific example, the longer arm 402 extends along a straight line and has a longitudinal axis 408. According to this specific example also, the shorter arm 403 extends along an arc 409 of a circle having a centre (not shown) along the longitudinal axis 408 of the longer arm 402, the arc 409 having a concave side facing towards the second region 307 and a convex side facing towards the first region 305. The shorter arm 405 intersects the longer arm 405 and has concave edging 410 and convex edging 411. The section of the longer arm 402 of the base portion 302 that spans from the concave edging 410 of the shorter arm 405 to the first end 403 of the longer arm 402 is hereinafter referred to as a 'tail' and the section of the longer arm 402 of the base portion 302 that spans from the convex edging 411 of the shorter arm 405 to the second end 404 of the longer arm 402 is hereinafter referred to as a 'tab'.

In the present example, the base portion 302 is symmetrical with respect to longitudinal axis 408.

It is to be appreciated that the base portion 302 may have any suitable shape.

In this example, the securing arrangement 308 comprises adhesive. The adhesive may be provided over a single area, or multiple separate areas, of a surface of the third region 309 of the base portion 302. Preferably, a removable cover layer (not shown) is provided over the adhesive.

It is to be appreciated that the securing arrangement 308 may additionally or alternatively comprise a mechanical fixing.

In this example, the electrical connector device 306 comprises a socket for engagement with a plug (not shown in **Figures 3 to 6****)** of control gear of a luminaire. Alternatively, the electrical connector device 306 may comprise a plug for engagement with a socket of control gear of a luminaire. It is to be appreciated that the electrical connector device 306 may comprise any suitable alternative connection member.

In this example, the electronic component 304 is an indicating component. In this example also, the installation element 301 is provided for connecting a visual indicating component, to an emergency power supply associated with a luminaire. Preferably, and in this example, the visual indicating component comprises a light-emitting diode. The light-emitting diode is preferably configured to be illuminated green, optionally configured to be selectively illuminated green or red.

In another example, the electronic component 304 is a sensing component. In an example, the installation element 301 is provided for connecting a light detecting component to a daylight harvesting driver associated with a luminaire. Preferably, the light detecting component comprises a surface-mounted photodiode.

In a further example, the electronic component 304 is a switching component.

It is to be appreciated that the electronic component 304 may be any alternative electronic component. It is further to be understood that the installation element 301 may carry more than one electronic component 304 wired to the printed circuit 303 and electrically connected to the electrical connector device 306, and that a plurality of electronic components 304 of the installation element 301 may comprise electronic components of the same type or of different types.

According to the shown arrangement of the present example, the electronic component 304 is an LED indicator configured to project light in a forward direction from the second side 401 of the base portion 302, the electrical connector device 306 is a socket disposed on the first side 310 of the base portion 302 and the securing arrangement 308 is a layer of adhesive on the second side 401 of the base portion 302. A suitable sealant, such as a silicone sealant, is preferably used to waterproof at least the LED indicator 304, but optionally part or all of the second face 401 of the base portion 302.

Use of the installation element 301 will now be described with reference to Figures 7 to 12.

The installation element is usable in a method of electrically connecting an electronic component to control gear of a luminaire, the method comprising the steps of identifying a luminaire having control gear and a body member, receiving the installation element, and connecting the electrical connector device of the installation element to the control gear of the luminaire and securing the securing arrangement of the installation element to the body member of the luminaire such that the first region and the second region of the installation element extend in different planes and the electrical component is positionable at an exposed location when the luminaire is installed.

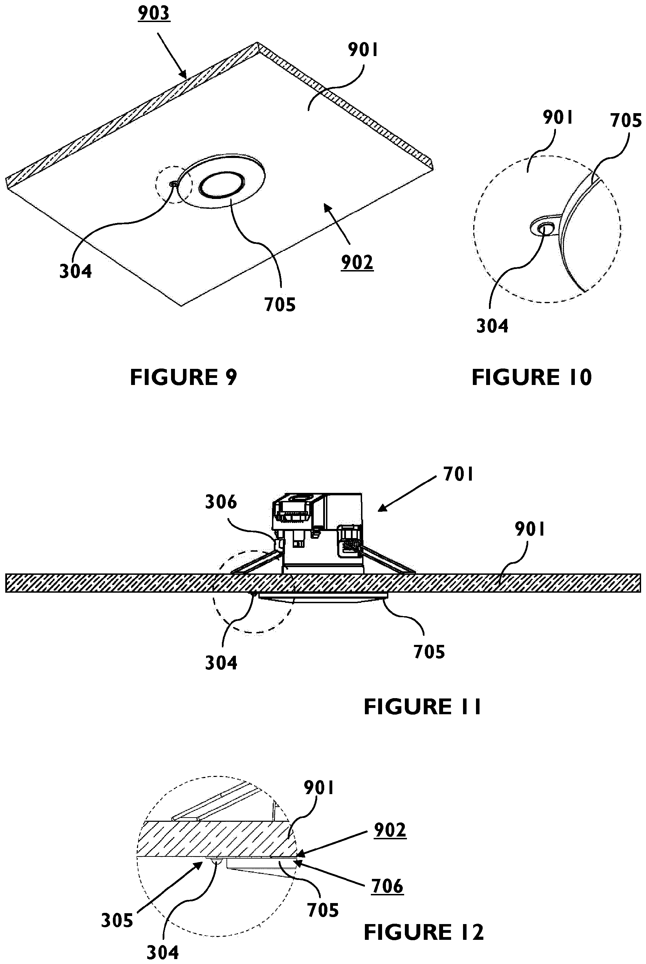

As mentioned previously, the installation element 301 of the present example is usable to connect an LED indicator 304 to control gear of a luminaire, such as LED downlight 701 of **Figures 7 to 12****.** The installation element 301 is shown mounted to LED downlight 701, in an electrically connected condition, in **Figures 7 & 8****,** and the LED downlight 701 and installation element 301 assembly is illustrated installed within a ceiling in **Figures 9 to 12****.**

As can be seen most clearly in **Figures 7 & 8****,** the LED downlight 701 comprises a body member 702 including a canister portion 703 having an external surface 704 and a mounting flange portion 705 having a reverse face 706 and an outer rim 707. The installation element 301 is mounted to the LED downlight 701. According to the shown arrangement, the shorter arm 405 of the base portion 302 is secured to the reverse face 706 of the mounting flange 705, using the adhesive of the securing arrangement 308 of the third region 309, the first region 305 of the base portion 302, which supports the LED indicator 304, projects radially outwardly from the mounting flange portion 705 and extends in the same plane as the shorter arm 405 of the base portion 302, and the second region 307 of the base portion 302, which supports the socket 306, extends along the external surface 704 of the canister portion 703 and substantially perpendicularly to the first region 305 of the base portion 302.

The canister portion 703 of the LED downlight 701 has a generally cylindrical form, and the mounting flange portion 705 has a generally annular form.

It can be seen from **Figure 7** in particular that the curvature of the shorter arm 405 of the base portion 302 is designed to complement the curvature at the junction between the canister portion 703 and the mounting flange portion 705 and the curvature of the outer rim 707 of the mounting flange portion 705. Further, a substantially right-angled bend in the base portion 302, along the concave edging 410 of the shorter arm 405 is also visible in **Figure 7****.**

The installation element 301 is attached to the LED downlight 701 with the shorter arm 402 fitted onto the mounting flange portion 704, the tail extending upwards along the canister portion 703 and the tab extending beyond the mounting flange portion 705.

As shown in **Figures 9 to 13****,** with the installation element 301 mounted to the LED downlight 701 as shown in **Figures 7 & 8****,** when the LED downlight 701 is fitted into a ceiling panel 901, the LED indicator 304 is disposed on the visible, underside 902 of the ceiling panel 901 and the socket 306 is disposed on the concealed, topside 902 of the ceiling panel 901. The LED indicator 304 is sited in an exposed position suitable for normal use. The socket 306 is engageable with a plug of an emergency module (not shown) associated with the LED downlight 701.

As most clearly shown in **Figure 12****,** the first region 305 of the base portion 302, which supports the LED indicator 304, and likewise the third region 309 of the base portion 302, which is provided with the adhesive of the securing arrangement 308, are disposed between the reverse surface 706 of the mounting flange portion 705 of the LED downlight 701 and the underside 902 of the ceiling panel 901.

Before, during and after installation of the LED downlight 701 in the ceiling panel, the position of the LED indicator 304 relative to the LED downlight 701 is maintained by being on a tab that is cantilevered from the LED downlight 701.

As the LED downlight 701 is installed within the ceiling panel 901, the LED indicator 304 is simultaneously installed at a suitable position without any need for a dedicated mounting aperture to be formed for the LED indicator 304 and without requiring the use of any tools to site the LED indicator 304.

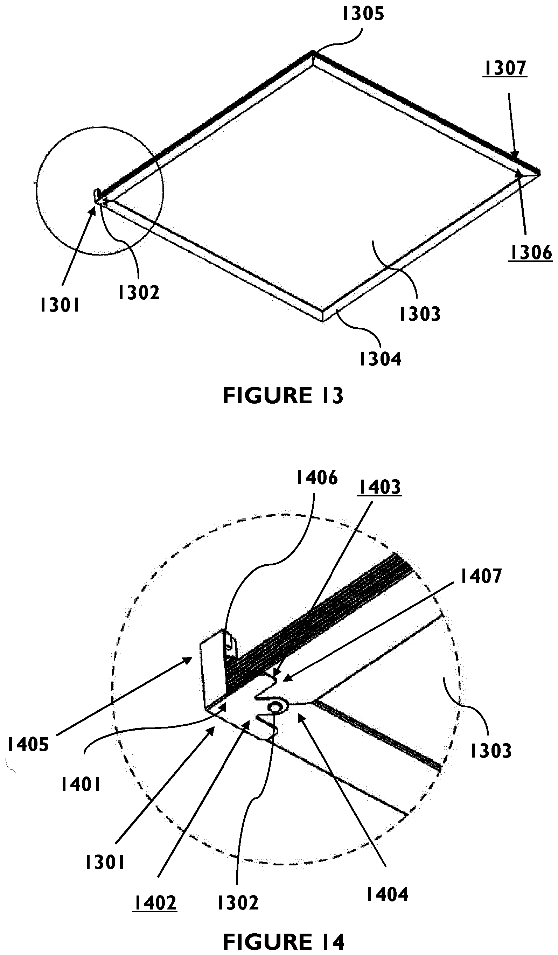

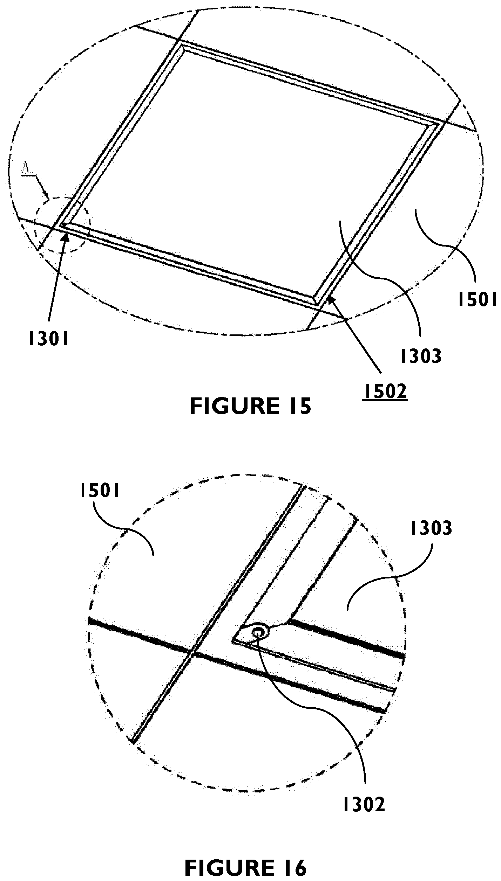

An installation element 1301, according to a second embodiment, is shown in **Figures 13** to **16****.** The installation element 1301 of this second illustrated embodiment is suitable for connecting an electronic component to control gear of a luminaire, and is, for example, usable to connect a light sensor 1302 to control gear of a luminaire, such as LED panel 1303 of **Figures 13 to 16****.** The installation element 1301 is shown mounted to LED panel 1303, in an electrically connected condition, in **Figures 13 & 14****,** and the LED panel 1303 and installation element 1301 assembly is illustrated installed within a ceiling in **Figures 15 & 16****.** The installation element 1301, and use of the installation element 1301, will be described with reference to **Figure 13 to 16****.**

The installation element 1301 of **Figures 13 to 16** is similar to the installation element 301 of **Figures 3 to 12****;** however, the shape of the installation element 1301 differs from the shape of the installation element 301, as the LED panel 1303 has a body member 1304 that differs in shape to the body member 702 of LED downlight 701.

In this present example, the installation element 1301 has a base portion 1401 having a first face 1402 and a second face 1403. A first region 1404 of the base portion 1401 supports the light sensor 1302. In this example, the light sensor 1302 is a surface-mounted photodiode. A second region 1405 of the base portion 1401 supports an electrical connector device 1406. In this example, the electrical connector device 1406 is a socket. The electrical connector device 1406 is usable to connect the light sensor 1302 to a daylight harvesting driver (not shown) associated with the LED panel 1303. A third region 1407 of the base portion 1401 supports a securing arrangement for attaching the base portion 1401 to the LED panel 1303. In this example, the securing arrangement is adhesive, which is provided on the first face 1402 of the base portion 1401.

The body member 1304 of LED panel 1303 is substantially rectangular with corners 1305, an obverse face 1306 and a reverse face 1307.

In common with the installation element 301, the second region 1405 of the base portion 1401 of the installation element 1301 is spaced from the first region 1404 of the base portion 1401, the base portion 1401 is flexible to allow the base portion 1401 to be manipulated into a condition in which the first region 1404 and the second region 1405 extend in different planes, and the third region 1407 of the base portion 1401 is separate from the second region 1405 of the base portion 1401.

Referring to **Figures 13 & 14** in particular, the installation element 1301 is shown attached to the LED panel 1303, at a corner 1305 thereof, with the first region 1404, which supports the light sensor 1302, and the third region 1407, extending along the obverse face 1306 of the body member 1304, and both extending in a first plane, and the second region 1405, which supports the socket 1406, extending upwardly from the obverse face 1306 of the body member 1304 and projecting upwardly from the reverse face 1307 of the body member 1304, and extending in a second plane that is substantially perpendicularly to the first plane in which the first region 1404 and the third region 1407 extend.

Referring now to **Figures 15 & 16****,** as the LED panel 1303 is installed within ceiling structure 1501, the light sensor 1302 is simultaneously installed at a suitable position without any need for a dedicated mounting aperture to be formed for the light sensor 1302 and without requiring the use of any tools to site the light sensor 1302.

With the installation element 1301 mounted to the LED panel 1303 as shown in **Figures 13 & 14****,** when the LED panel 1301 is fitted into a ceiling structure 1501, as illustrated in **Figures 15 & 16****,** the light sensor 1302 is disposed on the visible, underside 1502 of the ceiling structure 1501 and the socket 1406 is disposed on the concealed, topside of the ceiling structure 1501. The light sensor 1302 is sited in an exposed position suitable for normal use. The socket 1406 is engageable with a plug of a daylight harvesting driver (not shown) associated with the LED panel 1303.

The first region 1404 of the base portion 1401, which supports the light sensor 1302, and likewise the third region 1407 of the base portion 1401, which is provided with the adhesive, are disposed between the obverse surface 1306 of the body member 1304 of the LED panel 1303 and the topside 902 of the ceiling structure 1501.

It is to be appreciated that an installation element as disclosed herein may be fabricated from any suitable materials and may have any suitable dimensions. Further, it is to be appreciated that an installation element as disclosed herein may support more than one electronic component. For example, an installation element may support an LED indicator configured to shine at least green light and may additionally support at least one LED configured to shine white light.

It is to be understood that an installation element as disclosed herein advantageously enables an electronic component to be positioned at an exposed location relative to a luminaire, so that the electronic component is accessible and/or visible, allowing interaction with the environment and/or a user/operative. The installation element beneficially improves the installation of an electronic component relative to a luminaire.

Although illustrative embodiments and examples of the invention have been disclosed in detail herein, with reference to the accompanying drawings, it is to be understood that the invention is not limited to the precise embodiments and examples shown and that various changes and modifications can be effected therein by one skilled in the art without departing from the scope of the invention as defined by the appended claims.

## Claims

1. An installation element (301) for connecting an electronic component to control gear of a luminaire (701) comprising a body member (702), comprising:
a base portion (302) supporting a printed circuit (303);
an electronic component (304) supported by a first region (305) of the base portion (302);
an electrical connector device (306) supported by a second region (307) of the base portion (302), the second region (307) of the base portion (302) spaced from the first region (305) of the base portion (302), and the electrical connector device (306) electrically connected to the electronic component (304) and electrically connectable to the control gear of the luminaire (701), whereby to electrically connect the installation element (301) to the luminaire (701); and **characterised by**
a securing arrangement (308) supported by a third region (309) of the base portion (302), the third region (309) of the base portion (302) separate from the first region (305) and second region (307), between the first region (305) and the second region (307) of the base portion (302) in a length direction (L), and the securing arrangement (308 having a shorter arm (405) in a different direction than the length direction (L) to be attachable to the body member (702) of the luminaire (701), whereby to mount the installation element (301) to the luminaire (701); and
wherein the base portion (302) is flexible to allow the base portion (302) to be manipulated into a condition in which the first region (305) and the second region (307) extend in different planes, whereby to position the electronic component (304) in a different plane to the electrical connector device (306).

2. An installation element (301) as claimed in claim 1, wherein the printed circuit (303) is a flexible printed circuit.

3. An installation element (301) as claimed in claim **1,** wherein the base portion (302) is substantially planar.

4. An installation element (301) as claimed in claim 3, wherein the base portion (302) is a pliable substrate.

5. An installation element (301) as claimed in claim 3 or claim 4, wherein the base portion (302) is manipulatable from a generally flat condition in which the first region (305) and the second region (307) extend generally in the same plane.

6. An installation element (301) as claimed in claim 5, wherein the base portion (302) has a length direction (L), along the length direction (L) the third region (309) is disposed between the first region (305) and the second region (307), and when the base portion (302) is in the generally flat condition, the first region (305), second region (307) and the third region (309) extend generally in the same plane.

7. An installation element (301) as claimed in any of claims I to 6, wherein the base portion (302) is manipulatable into a condition in which the first region (305) extends in a first plane and the second region (307) extends in a second plane, and an internal angle between the first plane in which the first region (305) extends and the second plane in which the second region (307) extends is one of: an obtuse angle, a right angle.

8. An installation element (301) as claimed in any of claims I to 7, wherein the base portion (302) has one of: a generally cruciform shape comprising a longer arm (402) and a shorter arm (403), with the first region (305) and the second region (307) positioned along the longer arm (402) and the third region (309) positioned along the shorter arm (403); a generally cruciform shape comprising a longer arm (402) and a shorter arm (403), with the first region (305) and the second region (307) positioned along the longer arm (402) and the third region (309) positioned along the shorter arm (403), and the shorter arm (403) extending along an arc (409) of a circle having a centre along a longitudinal axis (408) of the longer arm (402), the arc (409) having a concave side facing towards the second region (307) and a convex side facing towards the first region (305).

9. An installation element (301) as claimed in any of claims I to 8, wherein the securing arrangement (308) comprises one or both of: adhesive, a mechanical fixing.

10. An installation element (301) as claimed in any of claims I to 9, wherein the electrical connector device (306) comprises one of: a socket for engagement with a plug of control gear of a luminaire, a plug for engagement with a socket of control gear of a luminaire.

11. An installation element (301) as claimed in any of claims I to 10, wherein the electronic component (304) is one of: an indicating component, a sensing component, a switching component.

12. An installation element (301) as claimed in any of claims I to 11, for connecting a visual indicating component to an emergency power supply associated with a luminaire, the visual indicating component optionally comprising a light-emitting diode.

13. An installation element (301) as claimed in any of claims I to 11, for connecting a light detecting component to a daylight harvesting driver associated with a luminaire, the light detecting component optionally comprising a surface-mounted photodiode.

14. An installation element (301) as claimed in any of claims I to 13, wherein the installation element (301) comprises at least one further electronic component (304) wired to the printed circuit (303) and electrically connected to the electrical connector device (306).

15. A method of electrically connecting an electronic component to control gear of a luminaire, comprising the steps of:
identifying a luminaire (701) having control gear and a body member (702);
receiving an installation element (301) as claimed in any of claims I to 14; and
connecting the electrical connector device (306) of the installation element (301) to the control gear of the luminaire (701) and securing the securing arrangement (308) of the installation element (301) to the body member of the luminaire (701) such that the first region (305) and the second region (307) of the installation element (301) extend in different planes and the electronic component (304) is positionable at an exposed location when the luminaire (701) is installed.

## Patentansprüche

1. Installationselement (301) zum Verbinden eines elektronischen Bauelements mit einem Vorschaltgerät einer Leuchte (701), die ein Gehäuseelement (702) aufweist, umfassend:
einen Basisabschnitt (302), der eine gedruckte Schaltung (303) trägt;
ein elektronisches Bauelement (304), das durch einen ersten Bereich (305) des Basisabschnitts (302) getragen wird;
eine elektrische Anschlussvorrichtung (306), die durch einen zweiten Bereich (307) des Basisabschnitts (302) getragen wird, wobei der zweite Bereich (307) des Basisabschnitts (302) von dem ersten Bereich (305) des Basisabschnitts (302) beabstandet ist, und wobei die elektrische Anschlussvorrichtung (306) elektrisch mit dem elektronischen Bauelement (304) verbunden ist und elektrisch mit dem Vorschaltgerät der Leuchte (701) verbindbar ist, um dadurch das Installationselement (301) mit der Leuchte (701) elektrisch zu verbinden; und **gekennzeichnet durch**
eine Befestigungsanordnung (308), die durch einen dritten Bereich (309) des Basisabschnitts (302) zwischen dem ersten Bereich (305) und dem zweiten Bereich (307) des Basisabschnitts (302) in einer Längsrichtung (L) getragen wird, wobei der dritte Bereich (309) des Basisabschnitts (302) von dem ersten Bereich (305) und dem zweiten Bereich (307) getrennt ist, und die Befestigungsanordnung (308) in einer anderen Richtung als der Längsrichtung (L) einen kürzeren Arm (405) aufweist, um an dem Gehäuseelement (702) der Leuchte (701) befestigbar zu sein, wodurch das Installationselement (301) an der Leuchte (701) montiert wird; und
wobei der Basisabschnitt (302) flexibel ist, um zu ermöglichen, dass der Basisabschnitt (302) in einen Zustand gebracht werden kann, in dem sich der erste Bereich (305) und der zweite Bereich (307) in verschiedenen Ebenen erstrecken, um dadurch das elektronische Bauelement (304) in einer anderen Ebene als die elektrische Anschlussvorrichtung (306) zu positionieren.

2. Installationselement (301) gemäß Anspruch 1, wobei die gedruckte Schaltung (303) eine flexible gedruckte Schaltung ist.

3. Installationselement (301) gemäß Anspruch 1, wobei der Basisabschnitt (302) im Wesentlichen eben ist.

4. Installationselement (301) gemäß Anspruch 3, wobei der Basisabschnitt (302) ein biegsames Substrat ist.

5. Installationselement (301) gemäß Anspruch 3 oder Anspruch 4, wobei der Basisabschnitt (302) aus einem allgemein flachen Zustand heraus manipulierbar ist, in dem der erste Bereich (305) und der zweite Bereich (307) allgemein in derselben Ebene verlaufen.

6. Installationselement (301) gemäß Anspruch 5, wobei der Basisabschnitt (302) eine Längsrichtung (L) aufweist, der dritte Bereich (309) entlang der Längsrichtung (L) zwischen dem ersten Bereich (305) und dem zweiten Bereich (307) angeordnet ist, und wenn sich der Basisabschnitt (302) im allgemein flachen Zustand befindet, der erste Bereich (305), der zweite Bereich (307) und der dritte Bereich (309) sich allgemein in derselben Ebene erstrecken.

7. Installationselement (301) gemäß einem der Ansprüche 1 bis 6, wobei der Basisabschnitt (302) in einen Zustand bringbar ist, in dem sich der erste Bereich (305) in einer ersten Ebene und der zweite Bereich (307) in einer zweiten Ebene erstreckt, und ein Innenwinkel zwischen der ersten Ebene, in der sich der erste Bereich (305) erstreckt, und der zweiten Ebene, in der sich der zweite Bereich (307) erstreckt, eines von einem stumpfen Winkel und einem rechten Winkel ist.

8. Installationselement (301) gemäß einem der Ansprüche 1 bis 7, wobei der Basisabschnitt (302) eine der folgenden Formen aufweist: eine allgemein kreuzförmige Form mit einem längeren Arm (402) und einem kürzeren Arm (403), wobei der erste Bereich (305) und der zweite Bereich (307) entlang des längeren Arms (402) und der dritte Bereich (309) entlang des kürzeren Arms (403) angeordnet sind; eine allgemein kreuzförmige Form mit einem längeren Arm (402) und einem kürzeren Arm (403), wobei der erste Bereich (305) und der zweite Bereich (307) entlang des längeren Arms (402) und der dritte Bereich (309) entlang des kürzeren Arms (403) positioniert sind, und der kürzere Arm (403) sich entlang eines Bogens (409) eines Kreises mit einem Mittelpunkt entlang einer Längsachse (408) des längeren Arms (402) erstreckt, wobei der Bogen (409) eine dem zweiten Bereich (307) zugewandte konkave Seite und eine dem ersten Bereich (305) zugewandte konvexe Seite aufweist.

9. Installationselement (301) gemäß einem der Ansprüche 1 bis 8, wobei die Befestigungsanordnung (308) eines oder beides umfasst von: Klebstoff, einer mechanischen Befestigung.

10. Installationselement (301) gemäß einem der Ansprüche 1 bis 9, wobei die elektrische Anschlussvorrichtung (306) eines umfasst von: einer Buchse zum Eingriff mit einem Stecker eines Vorschaltgerätes einer Leuchte, einem Stecker zum Eingriff mit einer Buchse eines Vorschaltgerätes einer Leuchte.

11. Installationselement (301) gemäß einem der Ansprüche 1 bis 10, wobei das elektronische Bauelement (304) eines ist von: einem Anzeigebauelement, einem Erfassungsbauelement, einem Schaltbauelement.

12. Installationselement (301) gemäß einem der Ansprüche 1 bis 11 zum Verbinden eines optischen Anzeigebauelements mit einer einer Leuchte zugeordneten Notstromversorgung, wobei das optische Anzeigebauelement gegebenenfalls eine Leuchtdiode umfasst.

13. Installationselement (301) gemäß einem der Ansprüche 1 bis 11 zum Verbinden eines Lichterfassungsbauelements mit einem einer Leuchte zugeordneten Tageslicht-Harvesting-Treiber, wobei das Lichterfassungsbauelement gegebenenfalls eine oberflächenmontierte Fotodiode umfasst.

14. Installationselement (301) gemäß einem der Ansprüche 1 bis 13, wobei das Installationselement (301) mindestens ein weiteres elektronische Bauelement (304) umfasst, das mit der gedruckten Schaltung (303) verdrahtet und mit der elektrischen Anschlussvorrichtung (306) elektrisch verbunden ist.

15. Verfahren zum elektrischen Verbinden eines elektronischen Bauelements mit einem Vorschaltgerät einer Leuchte, umfassend die folgenden Schritte:
Identifizieren einer Leuchte (701), die ein Vorschaltgerät und ein Gehäuseelement (702) aufweist;
Empfangen eines Installationselements (301) gemäß einem der Ansprüche 1 bis 14; und
Verbinden der elektrischen Anschlussvorrichtung (306) des Installationselements (301) mit dem Vorschaltgerät der Leuchte (701) und Befestigen der Befestigungsanordnung (308) des Installationselements (301) am Gehäuseelement der Leuchte (701), sodass der erste Bereich (305) und der zweite Bereich (307) des Installationselements (301) in unterschiedlichen Ebenen verlaufen und das elektronische Bauelement (304) beim Einbau der Leuchte (701) an einer exponierten Stelle positionierbar ist.

## Revendications

1. Élément d'installation (301) pour connecter un composant électronique sur un dispositif de commande, de contrôle et de régulation d'un luminaire (701) qui comprend un élément de corps (702), comprenant :
une partie de base (302) qui supporte un circuit imprimé (303) ;
un composant électronique (304) qui est supporté par une première région (305) de la partie de base (302) ; et
un dispositif de connecteur électrique (306) qui est supporté par une deuxième région (307) de la partie de base (302), la deuxième région (307) de la partie de base (302) étant espacée de la première région (305) de la partie de base (302), et le dispositif de connecteur électrique (306) étant connecté électriquement au composant électronique (304) et pouvant être connecté électriquement au dispositif de commande, de contrôle et de régulation du luminaire (701), d'où il résulte que l'élément d'installation (301) est ainsi connecté électriquement au luminaire (701) ; et
**caractérisé par** :
un agencement de fixation ferme et sécurisée (308) qui est supporté par une troisième région (309) de la partie de base (302), la troisième région (309) de la partie de base (302) étant séparée de la première région (305) et de la deuxième région (307) et étant située entre la première région (305) et la deuxième région (307) de la partie de base (302) dans une direction de longueur (L), et l'agencement de fixation ferme et sécurisée (308) comportant un bras plus court (405) dans une direction qui est différente de la direction de longueur (L) de telle sorte qu'il puisse être lié à l'élément de corps (702) du luminaire (701), d'où il résulte que l'élément d'installation (301) est ainsi monté sur le luminaire (701) ; et
dans lequel la partie de base (302) est souple pour permettre la manipulation de la partie de base (302) selon une condition dans laquelle la première région (305) et la deuxième région (307) sont étendues dans des plans différents, d'où il résulte que le composant électronique (304) est ainsi situé dans un plan différent par rapport au dispositif de connecteur électrique (306).

2. Élément d'installation (301) tel que revendiqué selon la revendication 1, dans lequel le circuit imprimé (303) est un circuit imprimé souple.

3. Élément d'installation (301) tel que revendiqué selon la revendication 1, dans lequel la partie de base (302) est sensiblement plane.

4. Élément d'installation (301) tel que revendiqué selon la revendication 3, dans lequel la partie de base (302) est un substrat qui peut être plié.

5. Élément d'installation (301) tel que revendiqué selon la revendication 3 ou la revendication 4, dans lequel la partie de base (302) peut être manipulée depuis une condition selon une forme générale plane dans laquelle la première région (305) et la deuxième région (307) sont étendues de façon générale dans le même plan.

6. Élément d'installation (301) tel que revendiqué selon la revendication 5, dans lequel la partie de base (302) présente une direction de longueur (L), et suivant la direction de longueur (L), la troisième région (309) est disposée entre la première région (305) et la deuxième région (307), et lorsque la partie de base (302) est dans la condition selon une forme générale plane, la première région (305), la deuxième région (307) et la troisième région (309) sont étendues de façon générale dans le même plan.

7. Élément d'installation (301) tel que revendiqué selon l'une quelconque des revendications 1 à 6, dans lequel la partie de base (302) peut être manipulée selon une condition dans laquelle la première région (305) est étendue dans un premier plan et la deuxième région (307) est étendue dans un second plan, et un angle interne entre le premier plan dans lequel la première région (305) est étendue et le second plan dans lequel la deuxième région (307) est étendue est un angle qui est pris parmi : un angle obtus et un angle droit.

8. Élément d'installation (301) tel que revendiqué selon l'une quelconque des revendications 1 à 7, dans lequel la partie de base (302) présente une conformation de forme générale cruciforme qui est prise parmi : une conformation de forme générale cruciforme qui comprend un bras plus long (402) et un bras plus court (403), conformation selon laquelle la première région (305) et la deuxième région (307) sont positionnées suivant le bras plus long (402) et la troisième région (309) est positionnée suivant le bras plus court (403) ; et une conformation de forme générale cruciforme qui comprend un bras plus long (402) et un bras plus court (403), conformation selon laquelle la première région (305) et la deuxième région (307) sont positionnées suivant le bras plus long (402) et la troisième région (309) est positionnée suivant le bras plus court (403), et le bras plus court (403) est étendu suivant un arc (409) d'un cercle qui comporte un centre suivant un axe longitudinal (408) du bras plus long (402), l'arc (409) comportant un côté concave qui est orienté en direction de la deuxième région (307) et un côté convexe qui est orienté en direction de la première région (305).

9. Élément d'installation (301) tel que revendiqué selon l'une quelconque des revendications 1 à 8, dans lequel l'agencement de fixation ferme et sécurisée (308) comprend un moyen de fixation ferme et sécurisée qui est pris parmi un moyen de fixation ferme et sécurisée par adhérence et un moyen de fixation ferme et sécurisée mécanique ou comprend à la fois un moyen de fixation ferme et sécurisée par adhérence et un moyen de fixation ferme et sécurisée mécanique.

10. Élément d'installation (301) tel que revendiqué selon l'une quelconque des revendications 1 à 9, dans lequel le dispositif de connecteur électrique (306) comprend une prise qui est prise parmi : une prise femelle qui est destinée à être engagée avec une prise mâle de dispositif de commande, de contrôle et de régulation d'un luminaire et une prise mâle qui est destinée à être engagée avec une prise femelle de dispositif de commande, de contrôle et de régulation d'un luminaire.

11. Élément d'installation (301) tel que revendiqué selon l'une quelconque des revendications 1 à 10, dans lequel le composant électronique (304) est un composant qui est pris parmi : un composant d'indication, un composant de détection et un composant de commutation.

12. Élément d'installation (301) tel que revendiqué selon l'une quelconque des revendications 1 à 11, pour connecter un composant d'indication visuelle sur une alimentation électrique de secours qui est associée à un luminaire, le composant d'indication visuelle comprenant en option une diode électroluminescente.

13. Élément d'installation (301) tel que revendiqué selon l'une quelconque des revendications 1 à 11, pour connecter un composant de détection de lumière sur un moyen de pilotage de capture et de collecte de la lumière du jour qui est associé à un luminaire, le composant de détection de lumière comprenant en option une photodiode montée en surface.

14. Élément d'installation (301) tel que revendiqué selon l'une quelconque des revendications 1 à 13, dans lequel l'élément d'installation (301) comprend au moins un autre composant électronique (304) qui est raccordé par fil(s) électrique(s) au circuit imprimé (303) et qui est connecté électriquement au dispositif de connecteur électrique (306).

15. Procédé de connexion électrique d'un composant électrique sur un dispositif de commande, de contrôle et de régulation d'un luminaire, comprenant les étapes constituées par :
l'identification d'un luminaire (701) qui comporte un dispositif de commande, de contrôle et de régulation et un élément de corps (702) ;
la réception d'un élément d'installation (301) tel que revendiqué selon l'une quelconque des revendications 1 à 14 ; et
la connexion du dispositif de connecteur électrique (306) de l'élément d'installation (301) sur le dispositif de commande, de contrôle et de régulation du luminaire (701) et la fixation ferme et sécurisée de l'agencement de fixation ferme et sécurisée (308) de l'élément d'installation (301) sur l'élément de corps du luminaire (701) de telle sorte que la première région (305) et la deuxième région (307) de l'élément d'installation (301) soient étendues dans des plans différents et que le composant électronique (304) puisse être positionné au niveau d'une localisation exposée lorsque le luminaire (701) est installé.
